(19) Europäisches Patentamt / European Patent Office / Office européen des brevets

(11) **EP 4 285 086 B1**

(12) **FASCICULE DE BREVET EUROPEEN**

(45) Date de publication et mention de la délivrance du brevet:
**04.06.2025  Bulletin 2025/23**

(51) Classification Internationale des Brevets (IPC):
**G01F 1/28** $^{(2006.01)}$    *G01F 1/002* $^{(2022.01)}$

(52) Classification Coopérative des Brevets (CPC):
**G01F 1/28;** G01F 1/002

(21) Numéro de dépôt: **22702274.6**

(22) Date de dépôt: **28.01.2022**

(86) Numéro de dépôt international:
**PCT/EP2022/052036**

(87) Numéro de publication internationale:
**WO 2022/162138 (04.08.2022 Gazette 2022/31)**

(54) **DISPOSITIF DE MESURE DE DÉBIT**

DURCHFLUSSMESSVORRICHTUNG

FLOW RATE MEASUREMENT DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **29.01.2021  FR 2100847**

(43) Date de publication de la demande:
**06.12.2023  Bulletin 2023/49**

(73) Titulaire: **F-Reg**
**06410 Biot (FR)**

(72) Inventeur: **CURINIER, Emmanuel**
**06200 Nice (FR)**

(74) Mandataire: **Cornuejols, Georges**
**Cassiopi**
**230 Avenue de l'Aube Rouge**
**34170 Castelnau-le-Lez (FR)**

(56) Documents cités:
**ES-U- 1 077 812      GB-A- 191 008 320**
**JP-A- 2021 009 090   US-A- 2 461 351**
**US-A- 3 717 935      US-A- 5 275 042**

**Description**

DOMAINE TECHNIQUE DE L'INVENTION

La présente invention vise un dispositif de mesure de débit. Elle s'applique, en particulier, à la mesure de débit dans des canalisations d'eau de pluie ou d'eaux usées.

ÉTAT DE LA TECHNIQUE

Les dispositifs de mesure de débit sont performants pour les faibles débits de liquide, pour les débits faiblement variables, pour les liquides uniformes et pour les canalisations fermées et pour les écoulements laminaires. En effet, ils peuvent comporter des pièces, telles que des hélices, positionnées dans le flux de liquide. Par exemple, les débitmètres de pompe de distribution de carburant présentent une bonne précision. En revanche, pour les débits de liquide en dizaines, voire centaines de litres par seconde, pour les débits rapidement variables, pour les liquides pouvant véhiculer des solides ou des déchets et pour les canalisations ouvertes où le liquide est sous atmosphère d'air, et pour les écoulements turbulents, les dispositifs de mesure de débit sont très imprécis.

On connait les demandes de brevet GB 08320 A A.D. 1910, US 5 275 042 A, US 2 461 351, JP 2021 009090 A qui divulguent des débitmètres.

PRÉSENTATION DE L'INVENTION

La présente invention vise à remédier à tout ou partie de ces inconvénients.

A cet effet, la présente invention vise un dispositif de mesure de débit de liquide sur une canalisation, qui comporte, sur un support fixé à un périmètre de la canalisation :

- une pièce mobile en rotation autour d'un premier arbre sous l'action du flux de liquide,
- une masse supportée par un bras en rotation autour d'un deuxième arbre,
- un multiplicateur d'angle configuré pour transformer le mouvement angulaire de la pièce mobile en mouvement angulaire du bras supportant la masse, ce bras parcourant un angle supérieur à l'angle parcouru par la pièce mobile et
- un capteur de position du bras supportant la masse.

Grâce à ces dispositions, les forts débits de liquide, rapidement variables, pouvant véhiculer des solides ou des déchets en embouchure de canalisation où le liquide est sous atmosphère d'air, en écoulements turbulents, peuvent être mesurés de manière stable et précise. La masse, son support et le multiplicateur d'angle assurent un rôle d'amortisseur des turbulences et des variations de débit. Le capteur peut ainsi effectuer des mesures fiables.

De plus, la masse, son support et le multiplicateur d'angle réduisent l'angle d'inclinaison de la pièce mobile, dans le cas où l'embouchure est à l'air libre, en forçant le liquide à suivre une pente plus forte et à s'évacuer par une embouchure plus étroite qu'en absence de ces éléments. L'amplitude des débits mesurés est ainsi augmentée.

Dans des modes de réalisation, le moment d'inertie de la masse est supérieur au moment d'inertie de la pièce mobile.

Les effets d'amortisseur et de réduction d'angle décrits ci-dessus sont ainsi augmentés.

Dans des modes de réalisation, la pièce mobile est rectangulaire et le dispositif comporte des flancs latéraux plans perpendiculaires au plan de la pièce mobile et à distance constante de la pièce mobile.

Dans des modes de réalisation, la distance entre les flancs latéraux et la pièce mobile est inférieure à un dixième de la distance entre les flancs latéraux.

Grâce à chacune de ces dispositions, on augmente l'angle parcouru par le bras qui supporte la masse pour le même débit de liquide.

Dans des modes de réalisation, le multiplicateur d'angle comporte un bras multiplicateur connecté à un troisième arbre de rotation solidaire de la pièce mobile et à un quatrième arbre de rotation solidaire du bras supportant la masse, la distance entre le premier et le troisième arbre étant supérieure à la distance entre le deuxième et le quatrième arbre.

Dans des modes de réalisation, le multiplicateur d'angle est configuré pour que le ratio de l'angle parcouru par le bras supportant la masse sur l'angle parcouru par la pièce mobile soit au moins égal à deux.

Dans des modes de réalisation, le capteur de position comporte un inclinomètre.

Dans des modes de réalisation, le capteur de position comporte un accéléromètre.

Grâce à chacune de ces dispositions, le capteur de position ne comporte pas de pièce mécanique exposée au flux de liquide. Il n'y a donc pas de risque d'encrassement de ce capteur.

Dans des modes de réalisation, la pièce mobile présente une surface au moins égale à un dixième de mètre carré.

Dans des modes de réalisation, la masse est supérieure à un kilogramme.

Grâce à ces dispositions, le dispositif est adapté à mesurer des débits supérieurs à cent litres par seconde.

BREVE DESCRIPTION DES FIGURES

D'autres avantages, buts et caractéristiques particulières de l'invention ressortiront de la description non limitative qui suit d'au moins un mode de réalisation particulier du dispositif objet de la présente invention, en regard des dessins annexés, dans lesquels :

- la figure 1 représente, schématiquement en vue en perspective, un mode de réalisation particulier du dispositif objet de l'invention, lorsque le débit d'eau est nul,

- la figure 2 représente, schématiquement en vue de dessus, le dispositif illustré en figure 1,

- la figure 3 représente, schématiquement en vue de face, le dispositif illustré en figures 1 et 2,

- la figure 4 représente, schématiquement en vue de côté, le dispositif illustré en figures 1 à 3,

- la figure 5 représente, schématiquement en vue en perspective, un mode de réalisation particulier du dispositif objet de l'invention, lorsque le débit d'eau est important,

- la figure 6 représente, schématiquement en vue de dessus, le dispositif illustré en figure 5,

- la figure 7 représente schématiquement en vue de face, le dispositif illustré en figures 5 et 6 et

- la figure 8 représente schématiquement en vue de côté, le dispositif illustré en figures 5 à 7.

DESCRIPTION DES MODES DE REALISATION

La présente description est donnée à titre non limitatif, chaque caractéristique d'un mode de réalisation pouvant être combinée à toute autre caractéristique de tout autre mode de réalisation de manière avantageuse.

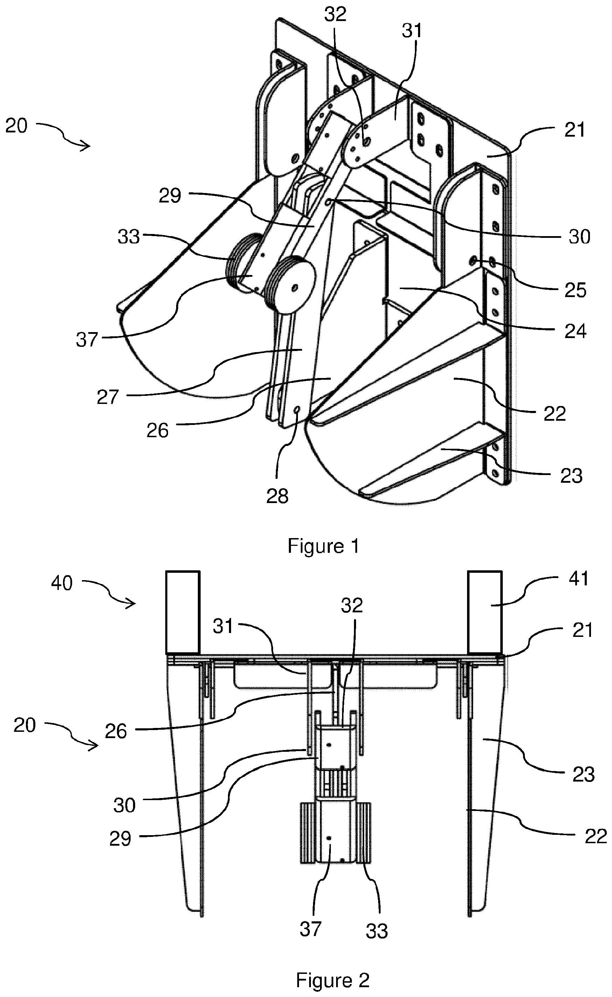

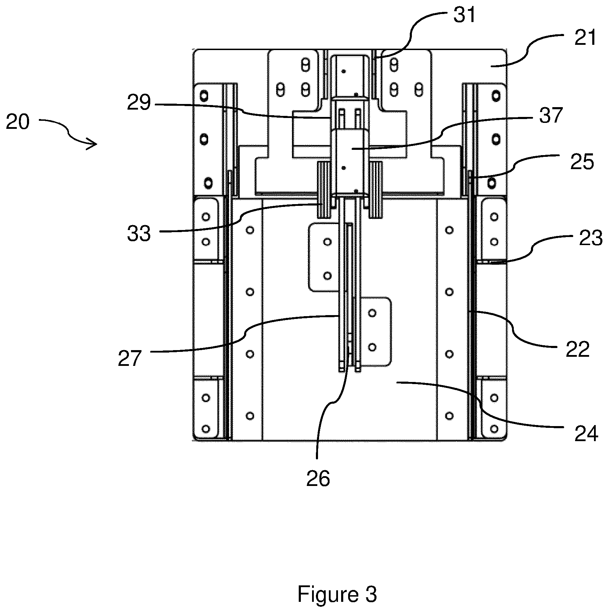

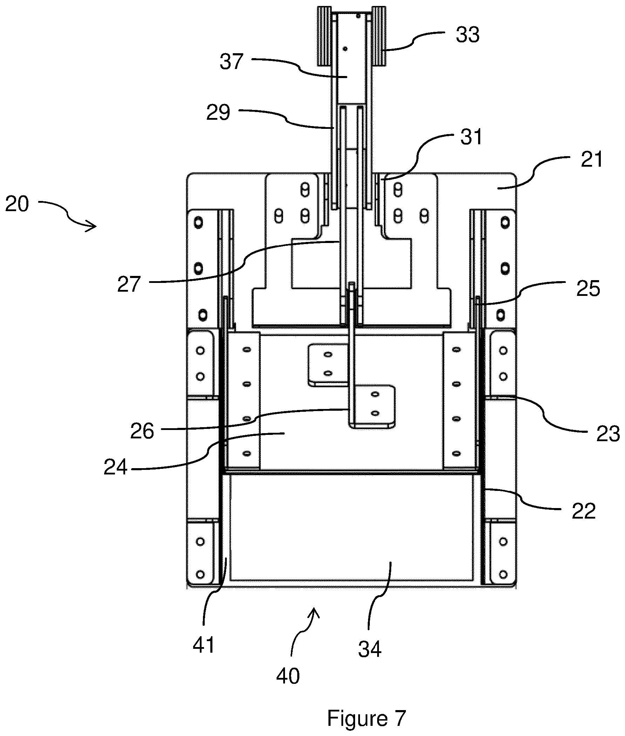

On note, dès à présent, que les figures 1 à 8 sont, chacune, à l'échelle et que les échelles des différentes figures peuvent être différentes.

Dans toute la description, on appelle « interne » ou « central » ce qui proche de ou orienté vers un axe de la canalisation et, « externe », ce qui est éloigné ou orienté à l'opposé de cet axe. On appelle « haut » ou « supérieur », ce qui est en haut dans les figures 1, 3, 4, 5, 7, 8, figures qui correspondent à la configuration d'utilisation du dispositif, la gravité s'exerçant vers le bas dans ces figures. On appelle « bas » ou « inférieur », ce qui est en bas dans ces figures. La hauteur du dispositif est définie de bas en haut sur ces figures et la largeur y est définie de gauche à droite. La profondeur est mesurée selon l'axe de la canalisation. On appelle « avant », ce qui est orienté dans le sens de la sortie de liquide de la canalisation, et « arrière » ce qui dans le sens opposé. On appelle face, la partie du dispositif visible depuis l'avant du dispositif.

On observe, en figures 1 à 4, un dispositif 20 monté en embouchure d'une canalisation 40. Dans d'autres modes de réalisation, un dispositif objet de l'invention est monté à l'intérieur d'une canalisation ou entre deux canalisations.

La canalisation 40 présente une section 34 et des parois 41 uniquement et partiellement représentées en figures 2, 6 et 7.

Le dispositif 20 constitue, dans les figures, une vanne « équivalent DN400 » (acronyme de « diamètre nominal 400 mm »).

Le dispositif 20 comporte un bâti fixe plan 21 supportant de deux flancs latéraux 22 verticaux munis, chacun, de deux équerres de renforts 23. Une pièce mobile 24 est mise en mouvement autour d'un premier arbre de rotation 25 par le flux de liquide. Un bras 29 est mobile en rotation autour d'un deuxième arbre de rotation 32 porté par deux pièces planes 31 perpendiculaires au bâti fixe 21. Le bras 29 porte, à son extrémité opposée au quatrième arbre de rotation 30, une masse 33 d'un moment d'inertie préférentiellement supérieur au moment d'inertie de la pièce mobile 24. Une pièce plane 26, perpendiculaire à la pièce mobile 24 est fixée sur cette pièce mobile 24. La pièce plane 26 porte un troisième arbre de rotation 28 supportant en rotation une extrémité d'un bras 27. A son autre extrémité, le bras 27 porte un quatrième arbre de rotation 30 qui supporte le bras 29.

Préférentiellement, la distance entre le premier arbre 25 et le troisième arbre 28 est supérieure à la distance entre le deuxième arbre 32 et le quatrième arbre 30.

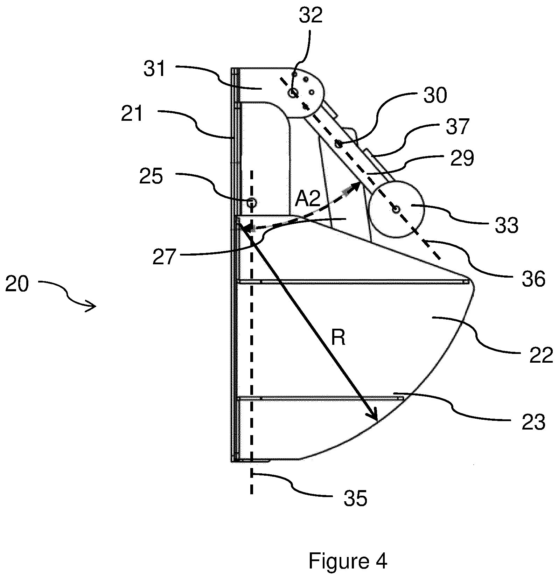

En l'absence de flux de liquide, la pièce mobile 24 est verticale et un axe 35 de la ligne de jonction de la pièce mobile et de la pièce rapportée 26 est vertical, comme illustré en figure 4.

Les flancs latéraux verticaux 22 présentent une forme partiellement circulaire couvrant la surface parcourue par les côtés verticaux de la pièce mobile 24. Le rayon R (voir figure 4) de la partie circulaire de la périphérie des flancs latéraux 22 est donc préférentiellement supérieur ou égal à la hauteur de la pièce mobile 24.

La distance entre les flancs latéraux 22 et la pièce mobile 24 est préférentiellement inférieure à un dixième de la distance entre les flancs latéraux 22.

Lorsqu'il n'y a aucun flux de liquide, c'est-à-dire un débit nul, l'axe 36 allant du deuxième arbre 32 au centre de gravité de l'ensemble constitué du bras 29 et de la masse 33 présente un angle A2 avec la verticale, comme illustré en figure 4.

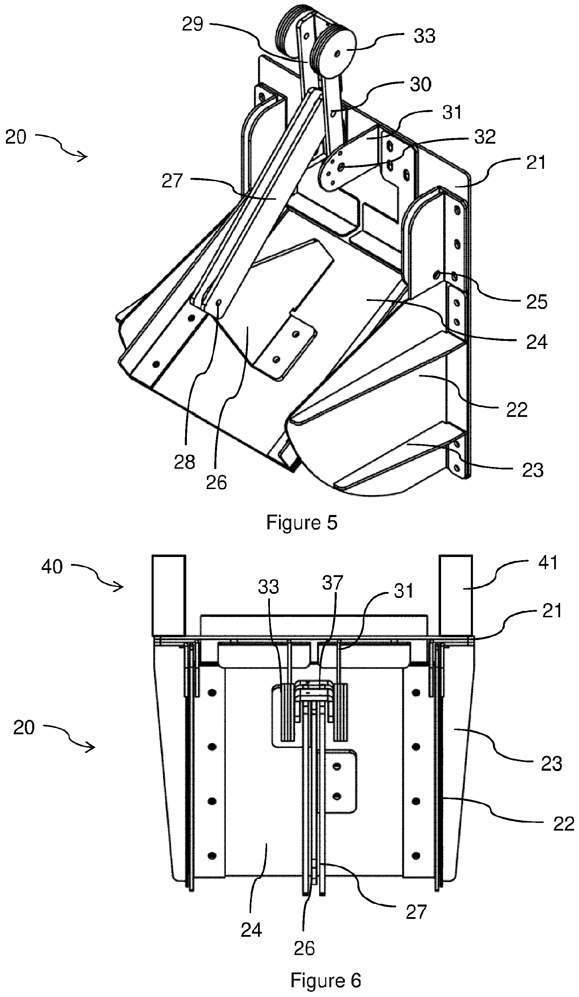

On observe, en figures 5 à 8 que, en présence d'un flux de liquide, donc d'un débit non nul, la pièce mobile 24 s'incline en montant sous l'effet de la poussée exercée par le flux de liquide.

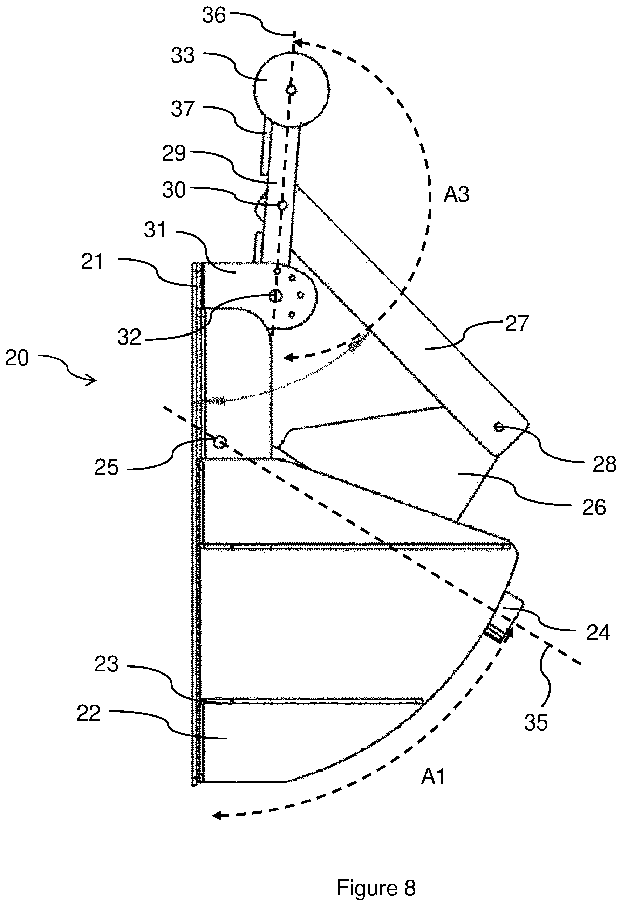

En présence d'un flux de liquide l'axe 35 de la ligne de jonction de la pièce mobile et de la pièce rapportée 26 présente un angle A1 avec la verticale, comme illustré en figure 8. L'axe 36 allant du deuxième arbre 32 au centre de gravité de l'ensemble constitué du bras 29 et de la masse 33 présente un angle A3 avec la verticale, comme illustré en figure 8.

Dans le mode de réalisation représenté, pour les débits les plus forts, lorsque la pièce mobile est complètement relevée et que l'angle A1 est le plus fort, la masse 33 est quasiment à la verticale de son axe 32, ce qui fait qu'elle n'exerce quasiment plus de force de fermeture qui réduirait le débit traversant le dispositif.

Comme on le comprend à la lecture de ce qui précède, la pièce rapportée 26, le bras 27 et le bras 29 constituent un multiplicateur d'angle qui transforme le mouvement angulaire de la pièce mobile 26 en mouvement angulaire du bras 29 supportant la masse 33, ce bras 29 parcourant un angle A3-A2 supérieur à l'angle A1 parcouru par la pièce mobile 24.

Dans des modes de réalisation, le multiplicateur d'angle est configuré pour que le ratio de l'angle A3-A2 parcouru par le bras 29 supportant la masse 33 sur l'angle A1 parcouru par la pièce mobile 24 soit au moins égal à deux.

Bien entendu, d'autres combinaisons de bras en mouvement permettent d'obtenir le même effet multiplicateur d'angle et la présente invention n'est donc pas limitée à l'exemple de multiplicateur d'angle représenté dans les figures 1 à 8.

Un capteur 37 de position du bras 29 supportant la masse 33 mesure l'angle A3 et, sur la base d'une fonction ou d'une table de correspondance conservée en mémoire, en déduit le débit de liquide. Par exemple, la fonction de correspondance entre la différence entre l'angle A3 et l'angle A2 et le débit mesuré est une fonction polynomiale ou exponentielle. Par exemple, pour les valeurs de différence d'angle A3-A2 supérieure ou égale à 10° :

- une différence d'angle A3-A2 égale à 10° correspond à un débit de 10 litres par seconde,
- une différence d'angle A3-A2 égale à 20° correspond à un débit de 25 litres par seconde,
- une différence d'angle A3-A2 égale à 30° correspond à un débit de 50 litres par seconde,
- une différence d'angle A3-A2 égale à 40° correspond à un débit de 94 litres par seconde et
- une différence d'angle A3-A2 de 50° correspond à un débit de 170 litres par seconde.

Ce qui correspond à la fonction

$$\text{débit (l/s)} = \exp[((A3-A2)/100)*5{,}5]*11{,}5-10,$$

où A3-A2 est exprimé en degrés d'angle.

Dans d'autres modes de réalisation, on met en œuvre une table de correspondance entre les angles avec la verticale de la pièce mobile 24 et du bras 29. Dans l'exemple décrit dans les figures, cette table de correspondance est :

| Angle du bras 29 (degrés) | Angle de la pièce mobile 24 (degrés) |
|---|---|
| 41.8 | 0 |
| 46.8 | 2.05 |
| 51.8 | 4.21 |
| 56.8 | 6.45 |
| 61.8 | 8.75 |
| 66.8 | 11.09 |
| 71.8 | 13.46 |
| 76.8 | 15.85 |

(suite)

| Angle du bras 29 (degrés) | Angle de la pièce mobile 24 (degrés) |
|---|---|
| 81.8 | 18.25 |
| 86.8 | 20.65 |
| 91.8 | 23.05 |
| 96.8 | 25.44 |
| 101.8 | 27.8 |
| 106.8 | 30.15 |
| 111.8 | 32.46 |
| 116.8 | 34.75 |
| 121.8 | 36.99 |
| 126.8 | 39.2 |
| 131.8 | 41.36 |
| 136.8 | 43.48 |
| 141.8 | 45.55 |
| 146.8 | 47.56 |
| 151.8 | 49.52 |
| 156.8 | 51.42 |
| 161.8 | 53.27 |
| 166.8 | 55.05 |
| 171.8 | 56.76 |
| 176.8 | 58.41 |

On donne, ci-dessous, des exemples de dimensions et de masses mises en œuvre :

- largeur du dispositif 20 comprise entre 30 cm et 70 cm,
- hauteur du dispositif 20 comprise entre 40 cm et 85 cm,
- profondeur du dispositif 20 compris entre 25 cm et 55 cm,
- hauteur de la pièce mobile 24 comprise entre 15 cm et 55 cm,
- largeur de la pièce mobile 24 comprise entre 20 cm et 60 cm,
- surface de la pièce mobile 24 préférentiellement au moins égale à un dixième de mètre carré pour une canalisation DN400,
- angle A2 compris entre 30° et 55°,
- masse 33 supérieure à 1 kg, préférentiellement supérieure ou égale à 2 kg,
- distance entre le troisième et le quatrième arbre compris entre 22 cm et 55 cm.

Avec ces dimensions, les forts débits de liquide, rapidement variables, pouvant véhiculer des solides ou des déchets en embouchure de canalisation où le liquide est sous atmosphère d'air, en écoulements turbulents, peuvent être mesurés de manière stable et précise.

Comme illustré dans les figures, dans des modes de réalisation, le support 21 fixé à un périmètre de la canalisation et la pièce mobile 24 constituent un clapet anti-retour.

Dans les figures, la pièce mobile 24 est rectangulaire. Dans d'autres modes de réalisation, la pièce mobile n'est pas plane et/ou n'est pas rectangulaire. Par exemple, la pièce mobile 24 est circulaire ou sphérique, les flancs 22 ayant alors une surface interne torique.

Dans des modes de réalisation, le capteur de position 37 comporte un inclinomètre. Dans des modes de réalisation, le capteur de position 37 comporte un accéléromètre. Ainsi, le capteur de position 37 ne comporte pas de pièce mécanique exposée au flux de liquide. Il n'y a donc pas de risque d'encrassement de ce capteur.

Dans des modes de réalisation, la pièce mobile présente une surface au moins égale à un dixième de mètre carré.

# EP 4 285 086 B1

**Revendications**

1. Dispositif (20) de mesure de débit de liquide sur une canalisation (40), qui comporte, sur un support (21) fixé à un périmètre de la canalisation, une pièce mobile (24) en rotation autour d'un premier arbre (25) sous l'action du flux de liquide,
**caractérisé en ce qu'**il comporte, de plus :

   - une masse (33) supportée par un bras (29) en rotation autour d'un deuxième arbre (32),
   - un multiplicateur (26, 27) d'angle configuré pour transformer le mouvement angulaire de la pièce mobile en mouvement angulaire du bras supportant la masse, ce bras parcourant un angle supérieur à l'angle parcouru par la pièce mobile et
   - un capteur de position (37) du bras supportant la masse.

2. Dispositif (20) selon la revendication 1, dans lequel le moment d'inertie de la masse (33) est supérieur au moment d'inertie de la pièce mobile (24).

3. Dispositif (20) selon l'une des revendications 1 ou 2, dans lequel la pièce mobile (24) est rectangulaire et le dispositif comporte des flancs latéraux (22) plans perpendiculaires au plan de la pièce mobile (24) et à distance constante de la pièce mobile.

4. Dispositif (20) selon la revendication 3, dans lequel la distance entre les flancs latéraux (22) et la pièce mobile (24) est inférieure à un dixième de la distance entre les flancs latéraux.

5. Dispositif (20) selon l'une des revendications 1 à 4, dans lequel le multiplicateur d'angle (26, 27) comporte un bras (27) multiplicateur connecté à un troisième arbre de rotation (28) solidaire de la pièce mobile (24) et à un quatrième arbre de rotation (30) solidaire du bras (29) supportant la masse (33), la distance entre le premier et le troisième arbre étant supérieure à la distance entre le deuxième et le quatrième arbre.

6. Dispositif (20) selon l'une des revendications 1 à 5, dans lequel le multiplicateur d'angle (26, 27) est configuré pour que le ratio de l'angle (A2, A3) parcouru par le bras (29) supportant la masse (33) sur l'angle (A1) parcouru par la pièce mobile (24) soit au moins égal à deux.

7. Dispositif (20) selon l'une des revendications 1 à 6, dans lequel le capteur de position (37) comporte un inclinomètre.

8. Dispositif (20) selon l'une des revendications 1 à 7, dans lequel le capteur de position (37) comporte un accéléromètre.

9. Dispositif (20) selon l'une des revendications 1 à 8, dans lequel la pièce mobile (24) présente une surface au moins égale à un dixième de mètre carré.

10. Dispositif (20) selon l'une des revendications 1 à 9, dans lequel la masse est supérieure à un kilogramme.


**Patentansprüche**

1. Vorrichtung (20) zur Messung des Flüssigkeitsdurchflusses in einer Rohrleitung (40), die auf einem an einem Umfang der Rohrleitung befestigten Träger (21) ein bewegliches Teil (24) aufweist, das sich unter der Wirkung des Flüssigkeitsstroms um eine erste Welle (25) dreht.
Diese Vorrichtung ist **dadurch gekennzeichnet, dass** sie außerdem Folgendes umfasst:

   - eine Masse (33), die von einem um eine zweite Welle (32) drehenden Arm (29) getragen wird,
   - einen Winkelmultiplikator (26, 27), der so konfiguriert ist, dass die Winkelbewegung des beweglichen Teils in eine Winkelbewegung des Arms umgewandelt wird, der die Masse trägt. Dabei bewegt sich dieser Arm in einem Winkel, der größer ist als der Winkel, den das bewegliche Teil zurücklegt, und
   - einen Positionssensor (37) des die Masse tragenden Arms.

2. Vorrichtung (20) nach Anspruch 1, bei der das Trägheitsmoment der Masse (33) größer ist als das Trägheitsmoment des beweglichen Teils (24).

3. Vorrichtung (20) nach einem der Ansprüche 1 oder 2, bei der das bewegliche Teil (24) rechteckig ist und die Vorrichtung ebene Seitenflanken (22) aufweist, die senkrecht zur Ebene des beweglichen Teils (24) und in konstantem Abstand zum beweglichen Teil verlaufen.

4. Vorrichtung (20) nach Anspruch 3, wobei der Abstand zwischen den Seitenflanken (22) und dem beweglichen Teil (24) kleiner als ein Zehntel des Abstands zwischen den Seitenflanken ist.

5. Vorrichtung (20) nach einem der Ansprüche 1 bis 4, bei der der Winkelmultiplikator (26, 27) einen Multiplikator-Arm (27) aufweist, der mit einer dritten Drehwelle (28) verbunden ist, die mit dem beweglichen Teil (24) fest verbunden ist, sowie mit einer vierten Drehwelle (30), die mit dem Arm (29) fest verbunden ist, der die Masse (33) trägt. Der Abstand zwischen der ersten und der dritten Welle ist größer als der Abstand zwischen der zweiten und der vierten Welle.

6. Vorrichtung (20) nach einem der Ansprüche 1 bis 5, wobei der Winkelmultiplikator (26, 27) so konfiguriert ist, dass das Verhältnis des vom die Masse (33) tragenden Arm (29) zurückgelegten Winkels (A2, A3) gegenüber dem vom beweglichen Teil (24) zurückgelegten Winkel (A1) mindestens zwei beträgt.

7. Vorrichtung (20) nach einem der Ansprüche 1 bis 6, bei der der Positionssensor (37) einen Neigungsmesser umfasst.

8. Vorrichtung (20) nach einem der Ansprüche 1 bis 7, wobei der Positionssensor (37) einen Beschleunigungsmesser umfasst.

9. Vorrichtung (20) nach einem der Ansprüche 1 bis 8, wobei das bewegliche Teil (24) mindestens eine Fläche von einem Zehntel Quadratmeter aufweist.

10. Vorrichtung (20) nach einem der Ansprüche 1 bis 9, wobei die Masse größer als ein Kilogramm ist.


**Claims**

1. Device (20) for measuring the flowrate of a liquid in a pipeline (40), which device comprises, on a mount (21) fixed to a perimeter of the pipeline, a part (24) rotatably moveable around a first shaft (25) through the action of the flow of liquid, **characterised in that** it also comprises:

   - a mass (33) supported by an arm (29) in rotation around a second shaft (32);
   - an angle multiplier (26, 27) configured to transform the angular movement of the moveable part into an angular movement of the arm supporting the mass, this arm travelling through an angle greater than the angle travelled by the moveable part; and
   - a sensor (37) of the position of the arm supporting the mass.

2. Device (20) according to claim 1, wherein the moment of inertia of the mass (33) is higher than the moment of inertia of the moveable part (24).

3. Device (20) according to one of claims 1 or 2, wherein the moveable part (24) is rectangular and the device comprises flat side flanks (22) perpendicular to the plane of the moveable part (24) and at a constant distance from the moveable part.

4. Device (20) according to claim 3, wherein the distance between the side flanks (22) and the moveable part (24) is less than one tenth of the distance between the side flanks.

5. Device (20) according to one of claims 1 to 4, wherein the angle multiplier (26, 27) comprises a multiplier arm (27) connected to a third rotating shaft (28) secured to the moveable part (24), and to a fourth rotating shaft (30) secured to the arm (29) supporting the mass (33), the distance between the first and third shafts being greater than the distance between the second and fourth shafts.

6. Device (20) according to one of claims 1 to 5, wherein the angle multiplier (26, 27) is configured such that the ratio of the angle (A2, A3) travelled by the arm (29) supporting the mass (33) to the angle (A1) travelled by the moveable part (24) is at least equal to two.

7. Device (20) according to one of claims 1 to 6, wherein the position sensor (37) comprises an inclinometer.

8. Device (20) according to one of claims 1 to 7, wherein the position sensor (37) comprises an accelerometer.

9. Device (20) according to one of claims 1 to 8, wherein the moveable part (24) has a surface at least equal to one tenth of a square metre.

10. Device (20) according to one of claims 1 to 9, wherein the mass is greater than one kilogramme.

Figure 1

Figure 2

Figure 3

Figure 4

Figure 5

Figure 6

Figure 7

Figure 8

**EP 4 285 086 B1**

## RÉFÉRENCES CITÉES DANS LA DESCRIPTION

### Documents brevets cités dans la description

- GB 08320 A, A.D.
- US 5275042 A
- US 2461351 A
- JP 2021009090 A